(19) Europäisches Patentamt
European Patent Office
Office européen des brevets

(11) EP 0 812 894 B1

(12) **EUROPÄISCHE PATENTSCHRIFT**

(45) Veröffentlichungstag und Bekanntmachung des Hinweises auf die Patenterteilung:
**07.03.2001 Patentblatt 2001/10**

(51) Int Cl.[7]: **C09J 183/04**, C08G 77/22

(21) Anmeldenummer: **97109169.9**

(22) Anmeldetag: **06.06.1997**

(54) **Elektrisch isolierender Klebstoff, Verfahren zu dessen Herstellung und dessen Verwendung zur Herstellung von elektrisch isolierenden Verklebungen**

Electrically insulating adhesive, process for making and its use as an electrically insulating adhesive

Adhésif électriquement isolant, sa préparation et son emploi dans le collage électriquement isolant

(84) Benannte Vertragsstaaten:
**AT BE CH DE FR GB IT LI LU NL SE**

(30) Priorität: **13.06.1996 DE 19623501**

(43) Veröffentlichungstag der Anmeldung:
**17.12.1997 Patentblatt 1997/51**

(73) Patentinhaber: **FRAUNHOFER-GESELLSCHAFT ZUR FÖRDERUNG DER ANGEWANDTEN FORSCHUNG E.V.
80636 München (DE)**

(72) Erfinder:
- **Popall, Michael, Dr. rer. nat.
97072 Würzburg (DE)**
- **Schulz, Jochen, Dr. rer. nat.
97209 Veitshöchheim (DE)**
- **Olsowski, Birke-E.
97209 Veitshöchheim (DE)**

(56) Entgegenhaltungen:
**EP-A- 0 223 067**
**EP-B- 0 036 648**
**WO-A-93/25604**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 812 894 B1

Printed by Jouve, 75001 PARIS (FR)

## Beschreibung

Die Erfindung betrifft einen elektrisch isolierenden Klebstoff, ein Verfahren zu dessen Herstellung und dessen Verwendung zur Herstellung von elektrisch isolierenden Verklebungen.

Zum Verkleben von anorganischen Materialien (Substraten) mit gleichen bzw. organischen Substraten sind zwar eine Vielzahl organischer Klebstoffe bekannt, Basis zur Anbindung an das organische Material ist hier allerdings lediglich das physikalische "Druckknopf-Prinzip". Außerdem werden auch Alkoxysilane als Haftvermittler/Klebstoff verwendet, welche über Silanol-Gruppen an die oxidische Oberfläche des anorganischen Substrates anbinden. Nachteilig ist hier, dass bei Verwendung von Primer und Kleber aufwendige Mehrschichttechnologie erforderlich ist, bzw. bei Verwendung nur des Haftvermittlers Ausgasen des entstehenden Alkohols unter Stressbedingungen der zu verbindenden Substrate zu erwarten ist.

In der EP 0 036 648 B1 ist ein Verfahren zum Verbinden von Substraten durch Heißsiegeln beschrieben. Dieses Verfahren ist nur unter Einsatz von Druck und Wärme anwendbar und erfordert zudem als Siegelmedium ein thermoplastisches Material. Dieses erweicht bei der angewandten Siegeltemperatur und wird durch den Siegeldruck dicht an das andere Substrat gepresst. Beim Abkühlen verfestigt sich das thermoplastische Siegelmedium und ergibt eine feste Klebeverbindung zwischen beiden Substraten.

In der EP 0 223 067 A1 sind Kleb- und Dichtungsmassen auf der Basis von Kieselsäureheteropolykondensaten offenbart, die zusätzlich mindestens ein copolymerisierbares Monomer oder Prepolymer enthalten. Diese Kleb- und Dichtungsmassen werden vor ihrem Einsatz mittels UV-Strahlung vorgehärtet und müssen dann innerhalb von 48 Stunden zu Verklebungen oder Dichtungen verarbeitet werden. Die Vorhärtung und die kurze Verarbeitungszeit machen die Anwendung umständlich und schlecht handhabbar.

In der WO 93/25604 A1 ist ein Lack auf der Basis von Kieselsäurepolykondensaten und ein Verfahren zur Herstellung einer Beschichtung auf optischen oder elektronischen Bauteilen beschrieben. Dieser Lack zeigt sehr kurze Topfzeiten, was eine rasche Weiterverarbeitung erforderlich macht.

Aufgabe der Erfindung war es, lagerstabile und elektrisch isolierenden Klebstoffe zur Verfügung zu stellen, die zur Herstellung elektrisch isolierender Verklebungen eingesetzt werden können. D.h. die verklebten Substrate sollen elektrisch isoliert sein. Der Klebstoff soll insbesondere eine hervorragende Anbindung an anorganische Substratmaterialien ermöglichen, d.h. er soll auf anorganischen Substratmaterialien hervorragend haften, und er soll einfach und schnell anzuwenden sein.

Gelöst wird diese Aufgabe durch eine organisch modifiziertes Kieselsäurepoly-kondensat, welches erhältlich ist durch (hydrolytische) Kondensation von

a) 1 bis 10 mol-% einer oder mehrerer Silicium-Verbindungen der allgemeinen Formel I,

$$Si\,R_4 \qquad (I)$$

in der die Reste R gleich oder verschieden sind und Halogen, Hydroxy, Alkoxy, Acyloxy oder einen Chelatliganden bedeuten;

b) 20 bis 94 mol-% einer oder mehrerer Silicium-Verbindungen der allgemeinen Formel II,

$$R''_m(R'''Y)_nSiX_{(4-m-n)} \qquad (II)$$

in der die Reste R'', R''' und X gleich oder verschieden sind und folgende Bedeutung haben:

- R'' = Alkyl, Alkenyl, Aryl, Alkylaryl, Arylalkyl, Alkenylaryl oder Arylalkenyl, wobei diese Reste gegebenenfalls durch Sauerstoff, Schwefel oder NH-Gruppen unterbrochen sind.
- R'''= Alkylen, Alkenylen, Arylen, Alkylarylen, Arylalkylen, Alkenylarylen oder Arylal-kenylen, wobei diese Reste gegebenenfalls durch Sauerstoff, Schwefel oder NH-Gruppen unterbrochen sind,
- X = Halogen, Hydroxy, Alkoxy, Acyloxy oder $NR'_2$, mit R' = Wasserstoff oder Alkyl;
- Y = ein Rest mit einer oder mehreren polymerisierbaren Gruppen,
- m = 0, 1,2 oder 3,
- n = 1, 2 oder 3, mit m+n = 1, 2 oder 3,

und

c) 5 bis 30 mol-% einer oder mehrerer Silicium-Verbindungen der allgemeinen Formel III,

$$R''_pSiX_{4-p} \qquad (III)$$

in der die Reste R" und X gleich oder verschieden sind und die oben genannte Bedeutung haben, mit p = 1, 2 oder 3,

und welches einen oder mehrere Platin- und/oder Palladium-Komplexe enthält.

Bevorzugt ist es, wenn der Anteil der Komponente a) der allgemeinen Formel I zwischen 2 und 6 mol-%, der Anteil der Komponente b) der allgemeinen Formel II zwischen 69 und 83 mol-% und der Anteil der Komponente c) der allgemeinen Formel III zwischen 15 und 25 mol-% liegt.

Die Alkyl-Reste sind z.B. geradkettige, verzweigte oder cyclische Reste mit 1 bis 20, insbesondere mit 1 bis 10 Kohlenstoff-Atomen und vorzugsweise niedere Alkyl-Reste mit 1 bis 6, besonders bevorzugt mit 1 bis 4 Kohlenstoff-Atomen. Spezielle Beispiele sind Methyl, Ethyl, n-Propyl, i-Propyl, n-Butyl, i-Butyl, s-Butyl, t-Butyl, n-Pentyl, n-Hexyl, Cyclohexyl, 2-Ethylhexyl, Dodecyl und Octadecyl.

Die Alkenyl-Reste sind z.B. geradkettige, verzweigte oder cyclische Reste mit 2 bis 20, bevorzugt mit 2 bis 10 Kohlenstoff-Atomen und vorzugsweise niedere Alkenyl-Reste mit 2 bis 6 Kohlenstoff-Atomen, wie z.B. Vinyl, Allyl und 2-Butenyl.

Bevorzugte Aryl-Reste sind Phenyl, Biphenyl und Naphthyl. Die Alkoxy-, Acyloxy-, Alkylamino-, Dialkylamino-, Alkylcarbonyl-, Alkoxycarbonyl-, Arylalkyl-, Alkylaryl-, Alkylen- und Alkylenarylen-Reste leiten sich vorzugsweise von den oben genannten Alkyl- und Aryl-Resten ab. Spezielle Beispiele sind Methoxy, Ethoxy, n- und i-Propoxy, n-, i-, s- und t-Butoxy, Monomethylamino, Monoethylamino, Dimethyla-mino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Monoalkylamino, Dialkylamino, Trialkylammonium, Amido, Hydroxy, Formyl, Carboxy, Mercapto, Cyano, Isocyanato, Nitro, Epoxy, $SO_3H$ oder $PO_4H_2$.

Unter den Halogenen sind Fluor, Chlor und Brom und insbesondere Chlor bevorzugt.

Die Silane der allgemeinen Formel I, II und III sind über die Reste R und X hydrolysierbar und kondensierbar. Über diese hydrolysierbaren Gruppen kann ein anorganisches Netzwerk mit Si-O-Si-Einheiten aufgebaut werden, während im Rest Y der allgemeinen Formel II enthaltene polymerisierbare Gruppen unter Aufbau eines organischen Netzwerkes polymerisieren.

Silane der allgemeinen Formel I weisen nur hydrolysierbare Reste auf und üben somit die Funktion eines anorganischen Netzwerkbildners aus. Ohne Einschränkung der Allgemeinheit sind konkrete Beispiele für Silane der allgemeinen Formel I $SiCl_4$, $HSiCl_3$, $Si(OCH_3)_4$, $Si(OOCH_3)_4$ und $Si(OC_2H_5)_4$, wobei $Si(OC_2H_5)_4$ (TEOS) bevorzugt ist.

Silane der allgemeinen Formel II weisen polymerisierbare Reste Y auf und üben damit die Funktion eines organischen Netzwerkbildners aus. Bevorzugt Ist es, wenn die Komponente b) der allgemeinen Formel II

$$R'''YSiX_3$$

ist, mit R''' gleich Alkylen mit 1 bis 4 C-Atomen, Y gleich Acryloxy, Methacryloxy, Glycidyloxy, Allyl, Vinyl oder Epoxycyclohexyl und X gleich Alkoxy mit 1 bis 4 C-Atomen. Ohne Einschränkung der Allgemeinheit sind konkrete Beispiele für Silane der allgemeinen Formel II

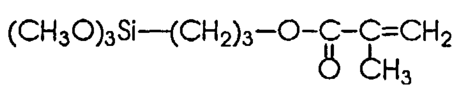

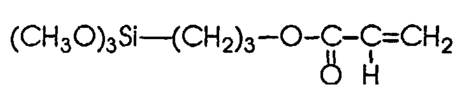

$(CH_3O)_3Si\text{-}CH_2\text{-}CH{=}CH_2$ $(CH_3O)_3Si\text{-}CH_2\text{-}CH_2\text{-}CH{=}CH_2$

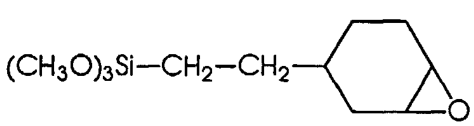

und

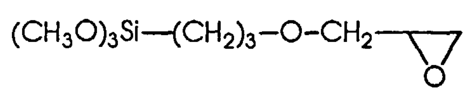

Besonders bevorzugt ist, wenn die Komponente b) der allgemeinen Formel II 3-Glycidyloxypropyltrimethoxysilan und/ oder 3-Methacryloxypropyltrimethoxysilan darstellt.

Silane der allgemeinen Formel III weisen sowohl hydrolysierbare Reste X auf als auch nicht-hydrolysierbare Reste R" und haben die Funktion eines Netzwerkwand-lers. Bevorzugt ist es, wenn die Komponente c) der allgemeinen Formel III die Formel

$$R''_2SiX_2$$

aufweist, mit R" gleich Aryl und X gleich Hydroxy oder Alkoxy mit 1 bis 4 Kohlenstoff-Atomen.

Ohne Einschränkung der Allgemeinheit sind konkrete Beispiele für Silane der allgemeinen Formel III $Cl_3SiCH_3$, $Si(CH_3)(OC_2H_5)_3$, $Si(C_2H_5)Cl_3$, $Si(C_2H_5)(OC_2H_5)_3$, $Si(CH=CH_2)(OC_2H_5)_3$, Si $Si(CH=CH_2)(OC_2H_4OCH_3)_3$, $Si(CH=CH_2)(OOCCH_3)_3$, $Cl_2Si(CH_3)_2$, $Si(CH_3)_2(OC_2H_5)_2$, $Si(C_2H_5)_2(OC_2H_5)_2$, $Cl_2Si(CH=CH_2)(CH_3)$, $ClSi(CH_3)_3$, $ClSi(C_2H_5)_3$, $ClSi(CH_3)_2(t\text{-}C_4H_9)$, $ClSi(CH_3)_2(CH_2\text{-}CH=CH_2)$, $Si(CH_3)_2(OCH_3)_2$, $Cl_2Si(C_6H_5)_2$, $Si(C_6H_5)_2(OC_2H_5)_2$, $Cl_3Si(CH=CH_2)$, $Si(OC_2H_5)_3(CH_2\text{-}CH=CH_2)$, $Si(OOCCH_3)_3(CH_2\text{-}CH=CH_2)$, $HOSi(i\text{-}C_3H_7)_3$ und $(HO)_2Si(C_6H_5)_2$.

Ein besonders bevorzugter Netzwerkwandler Ist $(HO)_2Si(C_6H_5)_2$,

Organisch modifizierte Silane der allgemeinen Formeln !, II und III sind entweder käuflich erwerbbar oder nach Methoden herstellbar wie in "Chemie und Technologie der Silicone" (W. Noll, Verlag Chemie, Weinheim/Bergstraße, 1968) beschrieben. Auf die Reinheit der eingesetzten Silane sollte geachtet werden, da Spuren an Elektrolyten, wie z.B. an Cl--, $B^{3+}$-, $Ca^{2+}$- oder $Ti^{4+}$-Ionen die elektrischen Eigenschaffen des Klebstoffes nachteilig verändern können. Die Silane der allgemeinen Formeln I, II und III können entweder als solche oder in vorkondensierter Form eingesetzt werden.

Zum Aufbau des anorganischen Netzwerkes werden die Silane der allgemeinen Formeln I, II und III hydrolysiert und polykondensiert. Die Polykondensation erfolgt vorzugsweise nach dem Sol-Gel-Verfahren, wie es z.B. in den DE-A1 2758414, 2758415, 3011761, 3826715 und 3835968 beschrieben ist. Die hydrolytische Kondensation kann z.B. dadurch erfolgen, daß man den zu hydrolysierenden Silicium-Verbindungen, die entweder als solche oder gelöst in einem geeigneten Lösungsmittel vorliegen, das erforderliche Wasser bei Raumtemperatur oder unter leichter Kühlung direkt zugibt (vorzugsweise unter Rühren und in Anwesenheit eines Hydrolyse- und Kondensationskatalysators) und die resultierende Mischung daraufhin einige Zeit (ein bis mehrere Stunden) rührt.

Die Hydrolyse erfolgt in der Regel bei Temperaturen zwischen -20 und 130 °C, vorzugsweise zwischen 0 und 30 °C bzw. dem Siedepunkt des gegebenenfalls eingesetzten Lösungsmittels. Wie bereits angedeutet, hängt die beste Art und Weise der Zugabe von Wasser vor allem von der Reaktivität der eingesetzten Ausgangsverbindungen ab. So kann man z.B. die gelösten Ausgangsverbindungen langsam zu einem Überschuß an Wasser tropfen oder man gibt Wasser in einer Portion oder portionsweise den gegebenenfalls gelösten Ausgangsverbindungen zu. Es kann auch nützlich sein, das Wasser nicht als solches zuzugeben, sondern mit Hilfe von wasserhaltigen organischen oder anorganischen Systemen in das Reaktionssystem einzutragen. Als besonders geeignet hat sich in vielen Fällen die Eintragung der Wassermenge in das Reaktionsgemisch mit Hilfe von feuchtigkeitsbeladenen Adsorbentien, z.B. von Molekularsieben, und von wasserhaltigen, organischen Lösungsmitteln, z.B. von 80 %-igem Ethanol, erwiesen. Die Wasserzugabe kann aber auch über eine chemische Reaktion erfolgen, bei der Wasser im Laufe der Reaktion freigesetzt wird. Beispiele hierfür sind Veresterungen.

Wenn ein Lösungsmittel verwendet wird, kommen neben den niederen aliphatischen Alkoholen (z.B. Ethanol oder i-Propanol) auch Ketone, vorzugsweise niedere Dialkylketone, wie Aceton oder Methylisobutylketon, Ether, vorzugsweise niedere Dialkylether wie Diethylether oder Dibutylether, THF, Amide, Ester, insbesondere Essigsäureethylester, Dimethylformamid, Amine, insbesondere Triethylamin, und deren Gemische in Frage.

Bevorzugt ist es jedoch, wenn die hydrolytische Kondensation ohne Zugabe eines Lösungsmittels durchgeführt wird.

Die Ausgangsverbindungen müssen nicht notwendigerweise bereits alle zu Beginn der Hydrolyse (Polykondensation) vorhanden sein, sondern in bestimmten Fällen kann es sich sogar als vorteilhaft erweisen, wenn nur ein Teil dieser Verbindungen zunächst mit Wasser in Kontakt gebracht wird und später die restlichen Verbindungen zugegeben werden.

Die Wasserzugabe kann auf einmal oder in mehreren Stufen, z.B. in drei Stufen, durchgeführt werden, Dabei kann in der ersten Stufe z.B. ein Zehntel bis ein Zwanzigstel der zur Hydrolyse benötigten Wassermenge zugegeben werden. Nach kurzem Rühren kann die Zugabe von einem Fünftel bis zu einem Zehntel der erforderlichen Wassermenge erfolgen und nach weiterem kurzen Rühren kann schließlich der Rest zugegeben werden.

Die Kondensationszeit richtet sich nach den jeweiligen Ausgangskomponenten und deren Mengenanteilen, dem gegebenenfalls verwendeten Katalysator, der Reaktionstemperatur, etc. Im allgemeinen erfolgt die Polykondensation bei Normaldruck, sie kann jedoch auch bei erhöhtem oder bei verringertem Druck durchgeführt werden.

Wird ein Lösungsmittel eingesetzt, so hat es sich als zweckmäßig erwiesen, wenn nach der Kondensation

das Lösungsmittel entzogen wird, bis ein Harz resultiert.

Die Platin- und/oder Palladium-Komplexe können vor und/oder während und/ oder nach der hydrolytischen Kondensation zugesetzt werden.

Das nach der Kondensation und bei Einsatz eines Lösungsmittels nach dessen Entfernung resultierende Harz läßt sich durch Zugabe von Polymerisationsstartern, wie z.B. von Diethylendiamid oder von Hexahydrophthalsäureanhydrid, bei niedrigen Temperaturen durch Polymerisation härten. Werden keine Polymerisationsstarter zugegeben, so läßt sich das Harz bei erhöhten Temperaturen, z.B. bei 180 °C härten.

Überraschenderweise wurde festgestellt, daß sich die so erhaltenen Harze ganz ausgezeichnet als Klebstoffe zum Verbinden von anorganischen Substraten eignen. Wird das Harz zwischen zwei Substrate gegeben, so werden diese im Zuge der Polymerisation miteinander verklebt. Überraschenderweise wurden bei Verklebungen von Silicium-Substraten bzw. bei Substraten mit $SiO_2$-Oberflächen Zugkräfte von mehr als 5 MPa gemessen.

Die erfindungsgemäßen Klebstoffe weisen einen hohen Anteil an Silanol-Gruppen auf, welche überraschenderweise eine ausgezeichnete Anbindung an anorganische Substratmaterialien ermöglichen. Der erfindungsgemäße Klebstoff zeichnet sich gegenüber den Klebstoffen nach dem Stand der Technik durch eine enorm verbesserte Haftung auf anorganischen Substratmaterialien aus. Im Zuge der erfindungsgemäßen Verklebung werden die verklebten Substrate nicht nur besonders fest miteinander verbunden, sondern auch elektrisch isoliert. Überraschenderweise ist zur Herstellung der erfindungsgemäßen Verklebungen keine aufwendige Mehrschichttechnologie erforderlich. Zur Herstellung der Verklebungen reicht es aus, wenn eines oder beide der zu verklebenden Substrate nach üblichen Methoden mit dem erfindungsgemäßen Klebstoff versehen und leicht zusammengepreßt werden. Zur Herstellung der erfindungsgemäßen Verklebungen Ist nur ein leichter Anpreßdruck erforderlich.

Überraschenderweise wurde festgestellt, daß die Zugabe von einem oder mehreren Platin- und/oder Palladium-Komplexen zum erfindungsgemäßen Klebstoff zum einen dessen bereits sehr gute Lagerstabilität weiter verbessert und zum anderen zu einer weiteren Erhöhung der Anzahl der Silanol-Gruppen und damit zu einer noch besseren Haftung führt. Durch den Einsatz der Platin- und/oder Palladium-Komplexe werden die Silanol-Gruppen im erfindungsgemäßen Klebstoff stabilisiert. Verbesserungen der Lagerstabilität und der Haftung konnten bereits bei einem molaren Verhältnis Si-OH : Pt bzw. Pd von 1 : $10^{-6}$ erzielt werden.

Die Platin- bzw. Palladium-Verbindungen werden bevorzugt in Form von Solen zugegeben. Zu deren Herstellung werden z.B. Lösungen von Pt-IV-Verbindungen mit den folgenden Stoffen oder mit Mischungen derselben reduziert: Acetaldehyd, Propionaldehyd, Brenzcatechin, Hydrochinon, Pyrogallol, Phloroglucin, Gallussäure, Tannin oder Protocatechinsäure. Bevorzugt ist es, wenn die Konzentration der Pt-IV-Lösung mindestens 0.0001 n und die Konzentration des Reduktionsmittels mindestens 0.001 n beträgt. Analoges gilt für den Einsatz von Palladium-Verbindungen.

Ohne Einschränkung der Allgemeinheit ist der erfindungsgemäße Klebstoff ganz vorzüglich zur Herstellung von elektrisch isolierenden Verklebungen In der Mikroelektronik oder (Mikro)Mechanik geeignet. Desweiteren kann der erfindungsgemäße Klebstoff in der Optik eingesetzt werden, z.B. als Alternative für anodisches Bonden, für Verklebungen von Schutzgläsern auf Solarzellen oder für Verklebungen von Leiterplatten mit Substraten zur Wärmeabfuhr.

Anhand von Ausführungsbeispielen wird die Herstellung der erfindungsgemäßen Klebstoffe und der erfindungsgemäßen Verklebungen näher erläutert,

<u>Beispiel 1:</u> Harz-Synthese

188.9 g 3-Glycidyloxipropyltrimethoxysilan, 189.7 g 3-Methacryloxypropyltrimeth-oxysilan, 84.8 g Diphenylsilandiol und 16.7 g Tetraethoxysilan werden 16 Stunden bei Raumtemperatur gerührt. Nun wird innerhalb von 90 Minuten auf 70 °C erhitzt. Im Verlauf dieses Aufwärmprozesses klart der anfangs trübe Ansatz auf. Nun werden in einer Portion 26.1 g Wasser zugesetzt und bis zum nochmaligen Aufklaren des Ansatzes bei 70 °C gerührt. Daraufhin werden 26.1 g Platin-Lösung (0.0001 n $H_2PtCl_6$ + 0.001 n Hydrochinon in Wasser) zugesetzt. Nach erneutem Erreichen des Klarpunktes werden nochmals 26.1 g Platin-Lösung zugesetzt und die Mischung wird 90 Minuten gerührt. Nach einer Verweilzeit wird dem Ansatz das Lösungsmittel-Wasser-Gemisch im Vakuum entzogen. Das resultierende Harz kann für Verklebungen eingesetzt werden.

<u>Beispiel 2:</u> Verklebung

7.0 g des Harzes aus Beispiel 1 werden mit 1.08 g Hexahydrophthalsäureanhydrid und 0.054 g N-Benzyldimethylamin versetzt und die Additive durch intensives Rühren im Harz gelöst. Die resultierende Mischung wird nach üblichen Methoden auf eines oder auf beide der zu verklebenden Substrate aufgetragen. Nach dem Zusammenfügen der Substrate, wobei nur ein leichter Anpreßdruck erforderlich ist, wird eine thermische Härtung innerhalb bei 180 °C durchgeführt. Die Aushärtzeit beträgt in diesem Fall mindestens 1 Stunde.

## Patentansprüche

1. Elektrisch isolierender Klebstoff, erhältlich durch (hydrolytische) Kondensation von

   a) 1 bis 10 mol-% einer oder mehrerer Silicium-Verbindungen der allgemeinen Formel 1,

   $$Si\ R_4 \qquad (I)$$

   in der die Reste R gleich oder verschieden sind und Halogen, Hydroxy, Alkoxy, Acyloxy oder einen Chelatliganden bedeuten;

   b) 20 bis 94 mol-% einer oder mehrerer Silicium-Verbindungen der allgemeinen Formel II,

   $$R''_m(R'''Y)_nSiX_{(4-m-n)} \qquad (II)$$

   in der die Reste R", R"' und X gleich oder verschieden sind und folgende Bedeutung haben:

   R" = Alkyl, Alkenyl, Aryl, Alkylaryl, Arylalkyl, Alkenylaryl oder Arylalkenyl, wobei diese Reste gegebenenfalls durch Sauerstoff, Schwefel oder NH-Gruppen unterbrochen sind,
   R"'= Alkylen, Alkenylen, Arylen, Alkylarylen, Arylalkylen, Alkenylarylen oder Arylal-kenylen, wobei diese Reste gegebenenfalls durch Sauerstoff, Schwefel oder NH-Gruppen unterbrochen sind,
   X = Halogen, Hydroxy, Alkoxy, Acyloxy oder $NR'_2$, mit R' = Wasserstoff oder Alkyl;
   Y = ein Rest mit einer oder mehreren polymerisierbaren Gruppen,
   m = 0, 1,2 oder 3,
   n = 1, 2 oder 3, mit m+n = 1, 2 oder 3,

   und

   c) 5 bis 30 mol-% einer oder mehrerer Silicium-Verbindungen der allgemeinen Formel III,

   $$R''_pSiX_{4-p} \qquad (III)$$

   in der die Reste R" und X gleich oder verschieden sind und die oben genannte Bedeutung haben, mit p = 1, 2 oder 3, dadurch gekennzeichnet, dass er einen oder mehrere Platin- und/oder Palladium-Komplexe enthält.

2. Klebstoff nach Anspruch 1, dadurch gekennzeichnet, dass der Anteil der Komponente a) der allgemeinen Formel I zwischen 2 und 6 mol-%, der Anteil der Komponente b) der allgemeinen Formel II zwischen 69 und 83 mol-% und der Anteil der Komponente c) der allgemeinen Formel III zwischen 15 und 25 mol-% liegt.

3. Klebstoff nach Anspruch 1 oder 2, dadurch gekennzeichnet, dass die Komponente a) der allgemeinen Formel I $Si(OC_2H_5)_4$ ist.

4. Klebstoff nach einem oder mehreren der Ansprüche 1 bis 3, dadurch gekennzeichnet, dass die Komponente b) der allgemeinen Formel II $R'''YSiX_3$ ist, mit R"' gleich Alkylen mit 1 bis 4 C-Atomen, Y gleich Acryloxy, Methacryloxy, Glycidyloxy, Allyl, Vinyl oder Epoxycyclohexyl und X gleich Alkoxy mit 1 bis 4 C-Atomen.

5. Klebstoff nach einem oder mehreren der Ansprüche 1 bis 4, dadurch gekennzeichnet, dass die Komponente b) der allgemeinen Formel II 3-Glycidyloxypropyltrimethoxysilan und/oder 3-Methacryloxypropyltrimethoxysilan ist.

6. Klebstoff nach einem oder mehreren der Ansprüche 1 bis 5, dadurch gekennzeichnet, dass die Komponente c) der allgemeinen Formel III $R''_2SiX_2$ ist, mit R" gleich Aryl und X gleich Hydroxy oder Alkoxy mit 1 bis 4 Kohlenstoff-Atomen.

7. Klebstoff nach Anspruch 6, dadurch gekennzeichnet, dass die Komponente c) der allgemeinen Formel III $(C_6H_5)_2Si$

$(OH)_2$ ist.

**8.** Klebstoff nach einem oder mehreren der Ansprüche 1 bis 7, dadurch erhältlich, dass die hydrolytische Kondensation ohne Zugabe eines Lösungsmittels durchgeführt wird.

**9.** Klebstoff nach einem oder mehreren der Ansprüche 1 bis 8, dadurch erhältlich, dass die hydrolytische Kondensation in Anwesenheit eines Katalysators durchgeführt wird.

**10.** Klebstoff nach einem oder mehreren der Ansprüche 1 bis 9, dadurch gekennzeichnet, dass die flüchtigen Bestandteile entfernt sind.

**11.** Verfahren zur Herstellung eines elektrisch isolierenden Klebstoffs nach einem oder mehreren der Ansprüche 1 bis 10, dadurch gekennzeichnet, dass man eine Mischung von

a) 1 bis 10 mol-% einer oder mehrerer Silicium-Verbindungen der allgemeinen Formel 1,

$$Si\ R_4 \qquad (I)$$

in der die Reste R gleich oder verschieden sind und Halogen, Hydroxy, Alkoxy, Acyloxy oder einen Chelatliganden bedeuten,

b) 20 bis 94 mol-% einer oder mehrerer Silicium-Verbindungen der allgemeinen Formel II,

$$R''_m(R'''Y)_nSiX_{(4-m-n)}$$

in der die Reste R", R"' und X gleich oder verschieden sind und folgende Bedeutung haben:

R" = Alkyl, Alkenyl, Aryl, Alkylaryl, Arylalkyl, Alkenylaryl oder Arylalkenyl, wobei diese Reste gegebenenfalls durch Sauerstoff, Schwefel oder NH-Gruppen unterbrochen sind;
R"' = Alkylen, Alkenylen, Arylen, Alkylarylen, Arylalkylen, Alkenylarylen oder Arylal-kenylen, wobei diese Reste gegebenenfalls durch Sauerstoff, Schwefel oder NH-Gruppen unterbrochen sind;
X = Halogen, Hydroxy, Alkoxy, Acyloxy oder $NR'_2$, mit R' = Wasserstoff oder Alkyl;
Y = ein Rest mit einer oder mehreren polymerisierbaren Gruppen;
m = 0, 1,2 oder 3;
n = 1, 2 oder 3, mit m+n = 1, 2 oder 3,

und

c) 5 bis 30 mol-% einer oder mehrerer Silicium-Verbindungen der allgemeinen Formel III,

$$R''_pSix_{4-p} \qquad (III)$$

in der die Reste R" und X gleich oder verschieden sind und die oben genannte Bedeutung haben, mit p = 1, 2 oder 3,
und/oder von den genannten Verbindungen abgeleitete Vorkondensate gegebenenfalls in Anwesenheit eines Lösungsmittels und/oder eines Katalysators durch Einwirken von Feuchtigkeit oder Wasser hydrolytisch kondensiert, und dass man vor und/oder während und/oder nach der hydrolytischen Kondensation eine oder mehrere Platin- und/oder Palladium-Komplexe zusetzt.

**12.** Verfahren nach Anspruch 11, dadurch gekennzeichnet, dass die hydrolytische Kondensation ohne Zugabe eines Lösungsmittels durchgeführt wird.

**13.** Verfahren nach Anspruch 11 oder 12, dadurch gekennzeichnet, dass die hydrolytische Kondensation in Anwesenheit eines Katalysators durchgeführt wird.

**14.** Verfahren nach einem oder mehreren der Ansprüche 11 bis 13, dadurch gekennzeichnet, dass Platin- und/oder Palladium-Lösungen mit Konzentrationen ≥ 0.0001 n zugesetzt werden.

**15.** Verfahren nach einem oder mehreren der Ansprüche 11 bis 14, dadurch gekennzeichnet, dass pro mol SiOH-Gruppen mindestens $10^{-6}$ mol Platin-und/oder Palladium-Verbindungen zugesetzt werden.

**16.** Verfahren nach einem oder mehreren der Ansprüche 11 bis 15, dadurch gekennzeichnet, dass nach der hydrolytischen Kondensation die flüchtigen Bestandteile entfernt werden.

**17.** Verwendung des Klebstoffs nach einem oder mehreren der Ansprüche 1 bis 10 zur Herstellung von elektrisch isolierenden Verklebungen.

**Claims**

**1.** Electrically insulating adhesive, obtainable by (hydrolytic) condensation of

a) 1 to 10 mol% of one or more silicon compounds of the general formula I,

$$SiR_4 \qquad (I)$$

wherein the residues R are identical or different and mean halogen, hydroxy, alkoxy, acyloxy or a chelate ligand;
b) 20 to 94 mol% of one or more silicon compounds of the general formula II,

$$R''_m(R'''Y)_nSiX_{(4-m-n)} \qquad (II)$$

wherein the residues R", R"' and X are identical or different and have the following meaning:

R" = alkyl, alkenyl, aryl, alkylaryl, arylalkyl, alkenylaryl or arylalkenyl, these residues possibly being interrupted by oxygen, sulphur or NH-groups,
R" = alkylene, alkenylene, arylene, alkylarylene, arylalkylene, alkenylarylene or arylalkenylene, these residues possibly being interrupted by oxygen, sulphur or NH-groups,
X = halogen, hydroxy, alkoxy, acyloxy or $NR'_2$. with R' = hydrogen or alkyl;
Y = a residue with one or more polymerisable groups,
m = 0, 1, 2 or 3,
n = 1, 2 or 3, with m+n = 1, 2 or 3,

and
c) 5 to 30 mol% of one or more silicon compounds of the general formula III,

$$R''_pSiX_{4-p} \qquad (III)$$

wherein the residues R" and X are identical or different and have the meaning mentioned above, with p = 1, 2 or 3, characterised in that it contains one or more platinum and/or palladium complexes.

**2.** Adhesive according to claim 1, characterised in that the proportion of component a) of the general formula I is between 2 and 6 mol%, the proportion of component b) of the general formula II is between 69 and 83 mol% and the proportion of component c) of the general formula III is between 15 and 25 mold%.

**3.** Adhesive according to claim 1 or 2, characterised in that the component a) of the general formula I is $Si(OC_2H_5)_4$.

**4.** Adhesive according to one or more of claims 1 to 3, characterised in that the component b) of the general formula II is $R'''YSiX_3$, with R"' equal to alkylene with 1 to 4 C-atoms, Y equal to acryloxy, methacryloxy, gylcidyloxy, allyl, vinyl or epoxycyclohexyl and X equal to alkoxy with 1 to 4 C-atoms.

5. Adhesive according to one or more of claims 1 to 4, characterised in that the component b) of the general formula II is 3-glycidyloxypropyl-trimethoxysilane and/or 3-methacryloxypropyltrimethoxysilane.

6. Adhesive according to one or more of claims 1 to 5, characterised in that the component c) of the general formula III is $R''_2SiX_2$, with R" equal to aryl and X equal to hydroxy or alkoxy with 1 to 4 carbon atoms.

7. Adhesive according to claim 6, characterised in that the component c) of the general formula III is $(C_6H_5)_2Si(OH)_2$.

8. Adhesive according to one or more of claims 1 to 7, obtainable in that the hydrolytic condensation is carried out without the addition of a solvent.

9. Adhesive according to one or more of claims 1 to 8, obtainable in that the hydrolytic condensation is carried out in the presence of a catalyst.

10. Adhesive according to one or more of claims 1 to 9, characterised in that the volatile components are removed.

11. Method of manufacturing an electrically insulating adhesive according to one or more of claims 1 to 10, characterised in that a mixture of

a) 1 to 10 mol% of one or more silicon compounds of the general formula I,

$$SiR_4 \quad (I)$$

wherein the residues R are identical or different and mean halogen, hydroxy, alkoxy, acyloxy or a chelate ligand,

b) 20 to 94 mol% of one or more silicon compounds of the general formula II,

$$R''_m(R'''Y)_nSiX_{(4-m-n)}$$

wherein the residues R", R"' and X are identical or different and have the following meaning:

R"= alkyl, alkenyl, aryl, alkylaryl, arylalkyl, alkenylaryl or arylalkenyl, these residues possibly being interrupted by oxygen, sulphur or NH-groups;
R"'= alkylarylene, alkylene, alkenylene, arylene, arylalkylene, alkenylarylene or arylalkenylene, these residues possibly being interrupted by oxygen, sulphur or NH-groups;
X = halogen, hydroxy, alkoxy, acyloxy or NR'2. with R'= hydrogen or alkyl;
Y = a residue with one or more polymerisable groups;
m = 0, 1, 2 or 3;
n = 1, 2 or 3, with m+n = 1, 2 or 3,

and

c) 5 to 30 mol% of one or more silicon compounds of the general formula III,

$$R''_pSiX_{4-p} \quad (III)$$

wherein the residues R" and X are identical or different and have the meaning mentioned above, with p = 1, 2 or 3,
and/or precondensates derived from the above-mentioned compounds are hydrolytically condensed through the action of humidity or water, possibly in the presence of a solvent and/or a catalyst, and in that before and/or during and/or after the hydrolytic condensation one or more platinum and/or palladium complexes are added.

12. Method according to claim 11, characterised in that the hydrolytic condensation is carried out without the addition of a solvent.

13. Method according to claim 11 or 12, characterised in that the hydrolytic condensation is carried out in the presence of a catalyst.

14. Method according to one or more of claims 11 to 13, characterised in that platinum and/or palladium solutions with concentrations ≥0.0001 n are added.

15. Method according to one or more of claims 11 to 14, characterised in that per mol SiOH groups at least $10^{-6}$ mol platinum and/or palladium compounds are added.

16. Method according to one or more of claims 11 to 15, characterised in that the volatile constituents are removed after the hydrolytic condensation.

17. Use of the adhesive according to one or more of claims 1 to 10 for manufacturing electrically insulating bonds.

**Revendications**

1. Adhésif électriquement isolant, que l'on peut obtenir par condensation (hydrolytique) de

a) 1 à 10 % molaire d'un ou plusieurs composés de silicium de formule générale I,

$$SiR_4 \qquad (I)$$

dans laquelle les radicaux R sont identiques ou différents et représentent un halogène, un hydroxy, un alcoxy, un acyloxy, ou un coordinat de chélates ;
b) de 20 à 94 % molaire d'un ou plusieurs composés de silicium de formule générale (II)

$$R''_m(R'''Y)_nSix_{(4-m-n)} \qquad (II)$$

dans laquelle les radicaux R", R' et X sont identiques ou différents et ont la signification suivante :

R" = alkyle, alcényle, aryle, alkylaryle, arylalkyle, alcénylaryle ou arylalcényle, ces radicaux pouvant le cas échéant être interrompus par un oxygène, un soufre ou des groupes NH,
R"' = alkylène, alcénylène, arylène, alkylarylène. arylal-kylène, alcénylarylène ou arylalcénylène, ces radicaux étant le cas échéant interrompus par un oxygène, un soufre ou des groupes NH,
X = halogène, hvdroxy, alcoxy, acyloxy ou $NR'_{2'}$ avec R' = hydrogène ou alkyle ;
y = un radical ayant un ou plusieurs groupes polymérisables,
m = 0, 1, 2 ou 3,
n = 1, 2 ou 3, avec n+m = 1, 2 ou 3,

et
c) de 5 à 30 % molaire de composé de silicium de formule générale III,

$$R''_pSiX_{4-p} \qquad (III)$$

dans laquelle les radicaux R" et X sont identiques ou différents et ont la signification indiquée ci-dessus avec p = 1, 2 ou 3,

caractérisé en ce qu'
il contient un ou plusieurs complexes de platine et/ou de palladium.

2. Adhésif selon la revendication 1,
caractérisé en ce que

- la proportion du composant a) de formule générale I est comprise entre 2 et 6 % molaire, la proportion de composant b) de formule générale II est comprise entre 69 et 83 % molaire et
- la proportion de composant c) de formule générale III est comprise entre 15 et 25 % molaire.

**3.** Adhésif selon la revendication 1 ou 2,
caractérisé en ce que
le composant a) est de formule générale $Si(OC_2H_5)_4$

**4.** Adhésif selon une ou plusieurs des revendications 1 à 3,
caractérisé en ce que
le composant b) de formule générale II est $R'''YSiX_3$, où R''' représente un alkylène ayant de 1 à 4 atomes de carbone, Y représente un acryloxy, méthacryloxy, glycidyloxy, allyle, vinyle ou époxycyclohexyle et X représente un alcoxy ayant de 1 à 4 atomes de carbone.

**5.** Adhésif selon une ou plusieurs des revendications 1 à 4,
caractérisé en ce que
le composant b) de formule générale II est le 3-glycidyloxypropyltriméthoxysilane et/ou le 3-méthacryloxy-propyltriméthoxysilane.

**6.** Adhésif selon une ou plusieurs des revendications 1 à 5,
caractérisé en ce que
le composant c) de formule générale III est $R'_2SiX_2$, où R" représente un aryle et X représente un hydroxy ou un alcoxy ayant de 1 à 4 atomes de carbone.

**7.** Adhésif selon la revendication 6,
caractérisé en ce que
le composant c) de formule générale III est $(C_6H_5)_2Si(OH)_2$.

**8.** Adhésif selon une ou plusieurs des revendications 1 à 7,
que l'on peut obtenir en réalisant la condensation hydrolytique sans addition de solvant.

**9.** Adhésif selon une ou plusieurs des revendications 1 à 8,
que l'on peut obtenir en réalisant la condensation hydrolytique en présence d'un catalyseur.

**10.** Adhésif selon une ou plusieurs des revendications 1 à 9,
caractérisé en ce qu'
on retire les composants volatils.

**11.** Procédé de production d'un adhésif électriquement isolant selon une ou plusieurs des revendications 1 à 10,
caractérisé en ce qu'
on condense un mélange de

a) 1 à 10 % molaire d'un ou plusieurs composés de silicium de formule générale I,

$$SiR_4 \quad (I)$$

dans laquelle les radicaux R sont identiques ou différents et représentent un halogène, un hydroxy, un alcoxy, un acyloxy, ou un coordinat de chélates ;
b) de 20 à 94 % molaire d'un ou plusieurs composés de silicium de formule générale (II)

$$R''_m(R'''Y)_nSiX_{(4-m-n)} \quad (II)$$

dans laquelle les radicaux R", R' et X sont identiques ou différents et ont la signification suivante :

R" = alkyle, alcényle, aryle, alkylaryle, arylalkyle, alcénylaryle ou arylalcényle, ces radicaux pouvant le cas

échéant être interrompus par un oxygène, un soufre ou des groupes NH,

R''' = alkylène, alcénylène, arylène, alkylarylène, arylalkylène, alcénylarylène ou arylalcénylène, ces radicaux étant le cas échéant interrompus par un oxygène, un soufre ou des groupes NH,

X = halogène, hydroxy, alcoxy, acyloxy ou $NR'_2$, avec R' = hydrogène ou alkyle ;

Y = un radical ayant un ou plusieurs groupes polymérisables,

m = 0, 1, 2 ou 3,

n = 1, 2 ou 3, avec n+m = 1, 2 ou 3,

et

c) de 5 à 30 % molaire de composé de silicium de formule générale III,

$$R''_pSiX_{4-p} \qquad (III)$$

dans laquelle les radicaux R'' et X sont identiques ou différents et ont la signification indiquée ci-dessus avec p = 1, 2 ou 3,

et/ou de précondensats dérivés des composés mentionnés, éventuellement en présence d'un solvant et/ou d'un catalyseur, par action de l'humidité ou de l'eau, en procédant par hydrolyse, et avant et/ou pendant et/ou après la condensation hydrolytique, on ajoute un ou plusieurs complexes de platine et/ou de palladium.

**12.** Procédé selon la revendication 11,
caractérisé en ce qu'
on effectue la condensation hydrolytique sans addition d'un solvant.

**13.** Procédé selon la revendication 11 ou 12,
caractérisé en ce qu'
on conduit la condensation hydrolytique en présence d'un catalyseur.

**14.** Procédé selon une ou plusieurs des revendications 11 à 13,
caractérisé en ce qu'
on ajoute des solutions de platine et/ou de palladium ayant des concentrations ≥ 0,0001 N.

**15.** Procédé selon une ou plusieurs des revendications 1 à 14,
caractérisé en ce qu'
on ajoute par mole de groupe SiOH au moins $10^{-6}$ molaire de composés de platine et/ou de palladium.

**16.** Procédé selon une ou plusieurs des revendications 11 à 15,
caractérisé en ce qu'
après la condensation hydrolytique on retire les composants volatils.

**17.** Utilisation de l'adhésif selon une ou plusieurs des revendications 1 à 10 pour la production de collages électriquement isolants.